# EUROPEAN PATENT SPECIFICATION

(11) **EP 2 307 816 B1**
(45) Date of publication and mention of the grant of the patent: **01.04.2015**
(21) Application number: 09757373.7
(22) Date of filing: 30.04.2009
(51) Int. Cl.: F24H 1/32, F24H 1/36, F24H 8/00, F24H 9/00, F24H 1/28

(54) **FIRE TUBE CONDENSING BOILER FOR GENERATING HOT WATER**
KONDENSATIONSBRENNROHRKESSEL ZUM HERSTELLEN VON WARMEM WASSER
CHAUDIÈRE À CONDENSATION POUR GÉNÉRER DE L'EAU CHAUDE

(30) Priority: 05.06.2008 IT MN20080010
(43) Date of publication of application: 13.04.2011
(73) Proprietor: Jahier, Giovanni, 46100 Mantova (IT)
(72) Inventor: Jahier, Giovanni, 46100 Mantova (IT)
(74) Representative: Modiano, Micaela Nadia
(86) International application number: PCT/EP2009/055309
(87) International publication number: WO 2009/146990

(56) References cited:
- EP-A1- 1 942 257
- EP-A2- 1 207 358
- WO-A1-98/33010
- WO-A1-2006/111317
- DE-U1- 9 200 784

## Description

### Technical Field

The invention relates to a fire tube condensing boiler for generating hot water.

### Background Art

The widespread diffusion achieved by fire tube condensing boilers is known; such boilers are provided with a structure that comprises an outer enclosure, which is adapted to delimit a portion of space designed to contain the water to be heated, which is introduced cold by way of an inlet connector that is located proximate to the base of the enclosure and exits hot by way of an outlet connector that is located proximate to the top of such enclosure.

In a raised position, the enclosure contains the furnace where combustion occurs, and tubes branch out from the furnace which are designed to convey the exhaust gases that convey heat to the water to be heated before being sent to the flue.

All the described elements are advantageously made of carbon steel, which, differently from what occurs for stainless steel, ensures easy joining of the several components by welding, but in this manner such elements are subject to the danger of corrosion by the condensation that, being a condensing boiler, is generated within the exhaust gases as a consequence of the condensation of the water vapor contained in such exhaust gases.

The same Applicant has filed patent applications related to protection against the danger of corrosion of exhaust gas conveyance tubes.

WO2006111317 discloses a fire tube condensing boiler comprising an outer enclosure that delimits a portion of space for containing the fluid to be heated, which is fed cold by means of an intake coupling located proximate to a base and flows out hot through a discharge coupling located proximate to the top of the enclosure. Located proximate to the top of the portion of space there is provided a thermostatic device which is adapted to allow the fluid contained therein to flow out when it reaches a preset temperature. The enclosure includes a by-pass line arranged therein.

WO9833010 discloses a heating device with a combustion chamber and a plurality of heat exchange tubes connected to, and extending from, the bottom of the combustion chamber through a water chamber. A baffle flow diverter is provided in the water chamber below the combustion chamber, and such baffle diverter may be a flat, circular disk with a central opening, or a disk with a central, downward indentation with openings at its edges.

EP1207358 discloses a flue gas heat exchanger with a coil liquid heat exchanger incorporated therein, extending about the flue gas tube pack and provided with ports directed away from the flue-gas tube pack. The coil liquid heat exchanger has an upper return-flow nipple and a lower forward-flow nipple at which there is provided a thermally actuated mixer with a bypass and mixer valve.

DE0200784U discloses a water heater with a furnace and a fin heat exchanger aranged above the furnace. A jacket, arranged cucumferentially about the furnace, is connected to the heat exhanger line with the interposition of a bypass line controlled by a temperature dependent control member.

### Disclosure of the Invention

The aim of the present invention is to provide a fire tube condensing boiler in which the furnace is also protected against the risk of corrosion.

This aim is achieved by a fire tube condensing boiler for generating hot water according to the invention, characterized in that it comprises the characteristics according to the appended claims.

### Brief Description of the Drawings

Further characteristics and advantages of the present invention will become better apparent from the description of a preferred but not exclusive embodiment thereof, illustrated by way of non-limiting example in the accompanying drawings, wherein:
Figure 1 is a longitudinal sectional view of the boiler, in which, as in the figures that follow, the exhaust gas conveyance tubes are not shown in cross-section;

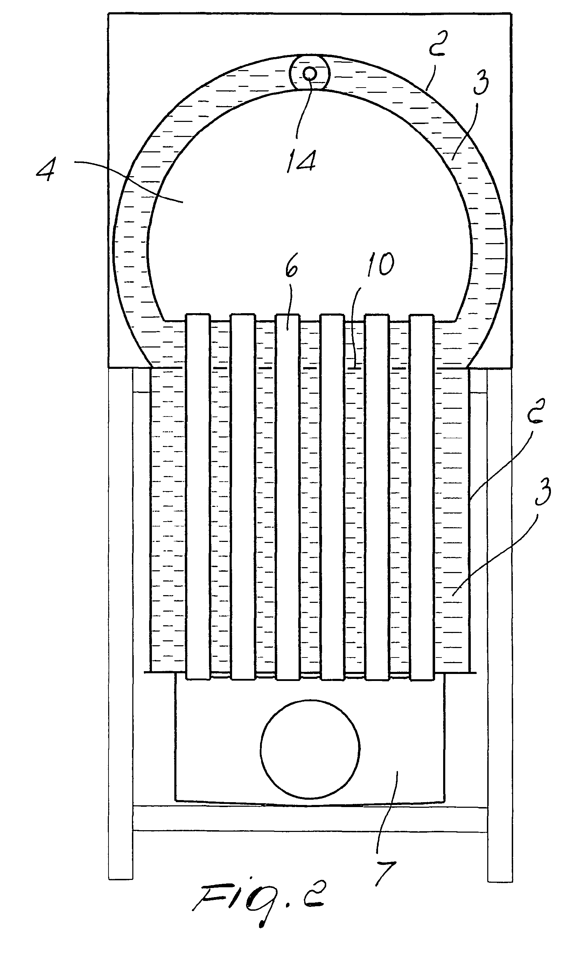

Figure 2 is a sectional view, taken along the line II-II of Figure 1;
Figures 3 and 4 are respectively views of the details shown in Figure 1.

### Ways of carrying out the Invention

With reference to the figures, the reference numeral 1 generally designates a boiler comprising an outer enclosure 2, which is adapted to delimit a portion of space 3 for containing the water to be heated, which is introduced cold by way of an inlet connector 3a located proximate to the base of the enclosure and exits hot by way of an outlet connector 3b that is located proximate to the top of the enclosure.

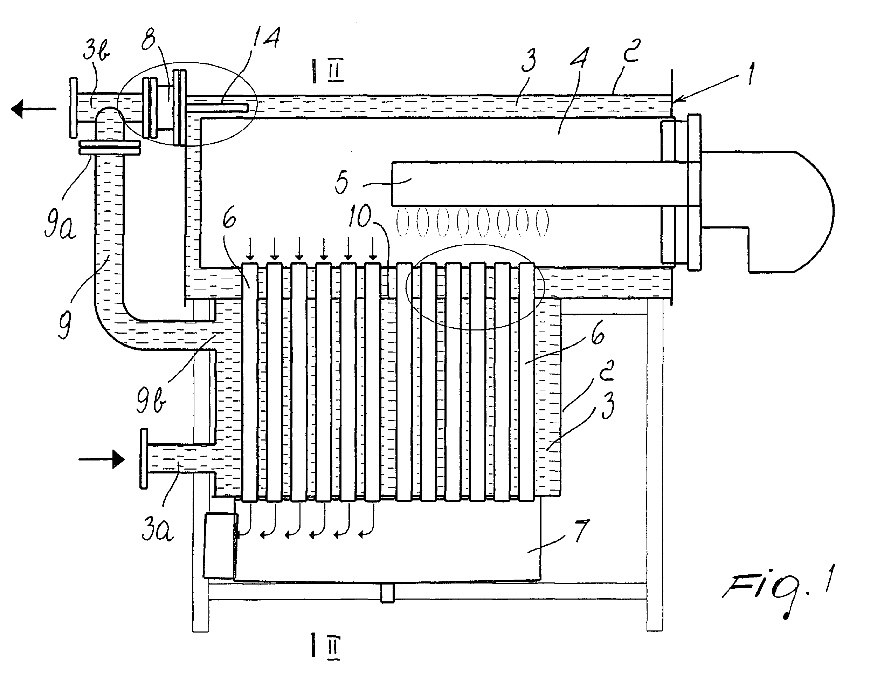

Moreover, the reference numeral 4 designates a furnace where the combustion generated by a burner 5 occurs, and the reference numeral 6 designates tubes designed to convey the exhaust gases in output from the furnace 4 to a chamber 7 for accessing a flue along the arrows of Figure 1.

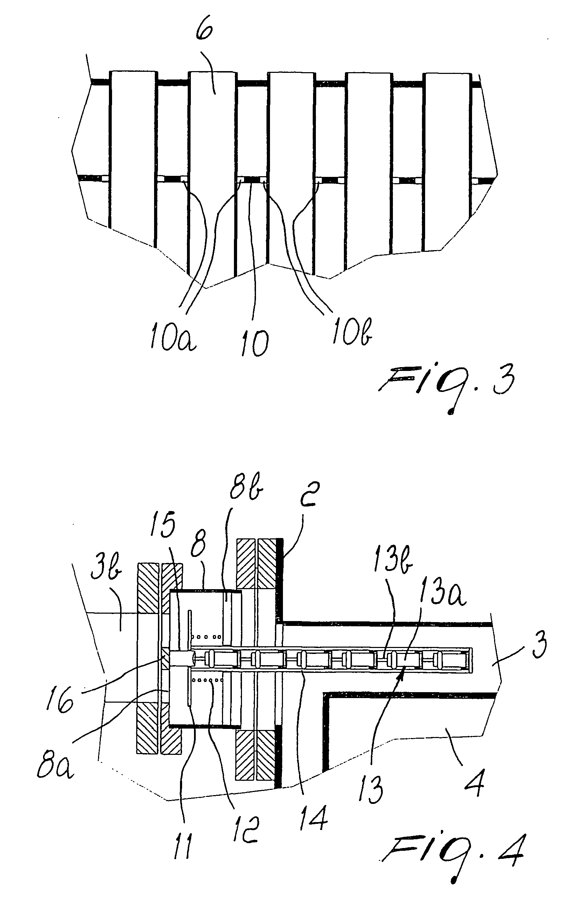

An important feature of the invention is the presence of a thermostatic device, which will be described in detail with reference to Figure 4 and is comprised within a stub 8 that is interposed between the outlet connector 3b and the portion of space 3 for containment of the water to be heated. Such device is adapted to let the water flow out through the connector 3b only when it reaches a preset value of the temperature that allows the accumulation, around the furnace 4, of a mass of water that is hot enough to prevent condensation on the wall of said furnace of the water vapor contained in the exhaust gases, thus providing protection of the furnace against the risk of corrosion caused by the formation of condensation.

Circulation of water through the boiler is in any case ensured by the presence of an external bypass line 9, which is connected at an end 9a to the outlet connector 3b downstream of the stub 8 that comprises the thermostatic device, and at an end 9b to the portion of space 3 that contains the water to be heated in a position that is interposed between the inlet connector 3a of the cold water and a diaphragm 10 that is located below the furnace 4 and is spaced from it and is provided with ports 10a, 10b that are visible in Figure 3, so as to appropriately graduate the passage of water through it.

The thermostatic device comprised within the stub 8 is now described with reference to Figure 4.

Such device comprises a plate 11, which is shown in the figure in the position for opening a port 8a for the passage of water, which has been moved into such position, overcoming the action of a spring 12, which abuts against a cross-member 8b that is jointly connected to the stub 8, by the action of a plurality of expanding heat-sensitive elements 13, which are constituted by known wax-based sensors which comprise a cylinder 13a that contains wax and a piston 13b, which are arranged in series within a tube 14 that is jointly connected to the plate 11 and act in abutment against a block 15 that is fixed to a cross-member 16 that is jointly connected to the stub 8.

With this arrangement, a multiplication of the strokes of the individual pistons 13b is obtained which produces satisfactory values of the stroke of the plate 11.

The described invention is susceptible of numerous modifications and variations within the scope of the appended claims

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fire tube condensing boiler (1) for generating hot water, provided with a structure made of carbon steel which comprises an outer enclosure (2) that is adapted to delimit a portion of space (3) for containing the water to be heated, which is introduced cold by way of an inlet connector (3a) located proximate to the base of the enclosure (2) and exits hot by way of an outlet connector (3b) located proximate to the top of the enclosure (2), said portion of space (3) being crossed by tubes (6) for conveyance of the exhaust gases produced by combustion in a furnace (4) located proximate to the top of said portion (3), the boiler (1) further comprising a thermostatic device that is interposed between said outlet connector (3b) and the portion of space (3) for containing the water to be heated, which is adapted to let the water flow out when it reaches a preset temperature value, and further comprising a bypass line (9) for conveying water that runs outsize the enclosure (2) that delimits the portion of space (3) for containing the water to be heated and is connected at two ends (9a, 9b) respectively to said outlet connector (3b) downstream of the thermostatic device and to said portion of space (3) in a position that is interposed between the inlet connector (3a) of the cold water and a perforated diaphragm (10) that is arranged below the furnace (4) and is spaced therefrom.

2. The boiler according to claim 1, **characterized in that** the thermostatic device comprises a plate (11) which is connected to a plurality of heat-sensitive expansion elements (13) arranged in series so as to be able to move said plate (11) away from the position for blocking the port for accessing the hot water outlet connector (3b), overcoming the action of a spring (12) that pushes said plate (11) toward said blocking position.

## Patentansprüche

1. Ein Kondensationsbrennrohrkessel (1) zum Herstellen von warmem Wasser, ausgestattet mit einer Struktur aus Kohlenstoffstahl, die ein Außengehäuse (2) umfasst, das ausgebildet ist, um einen Teil des Raums (3) zur Aufnahme des zu erwärmenden Wassers zu begrenzen, welches kalt über einen Einlassstutzen (3a) eingelassen wird, der sich nahe der Basis des Gehäuses (2) befindet, und heiß über einen Auslassstutzen (3b) austritt, der sich nahe der Oberseite des Gehäuses (2) befindet, wobei der Teil des Raums (3) von Rohren (6) für die Beförderung der Abgase durchquert wird, die durch Verbrennung in einem Ofen (4) produziert werden, der sich nahe dem oberen Ende des Teils (3) befindet, wobei der Kessel (1) weiter eine thermostatische Vorrichtung umfasst, die zwischen dem Auslassstutzen (3b) und dem Teil des Raums (3) zur Aufnahme des zu erwärmenden Wassers angeordnet ist, die ausgebildet ist, um das Wasser herausfließen zu lassen, wenn es einen voreingestellten Temperaturwert erreicht, und weiter eine Ausweichleitung (9) zur Beförderung von Wasser umfasst, die sich außerhalb des Gehäuses (2) erstreckt, das den Teil des Raums (3) zur Aufnahme des zu erwärmenden Wassers begrenzt, und an zwei Enden (9a, 9b) mit dem Auslassstutzen (3b) stromabwärts von der thermostatischen Vorrichtung beziehungsweise mit dem Teil des Raums (3) in einer Position verbunden ist, die sich zwischen dem Einlassstutzen (3a) des kalten Wassers und einer perforierten Membran (10) befindet, die unterhalb des Ofens (4) angeordnet und davon beabstandet ist.

2. Der Kessel gemäß Anspruch 1, **dadurch gekennzeichnet, dass** die thermostatische Vorrichtung eine Platte (11) umfasst, die mit einer Vielzahl wärmeempfindlicher Expansionselemente (13) verbunden ist, die seriell angeordnet sind, um die Platte (11) von der Position zum Blockieren des Anschlusses für den Zugang zum Heißwasser-Auslassstutzen (3b) fort zu bewegen, dabei die Wirkung einer Feder (12) zu überwinden, die die Platte (11) zu der Blockierposition hin drückt.

## Revendications

1. Chaudière à condensation à tubes de fumée (1) pour la production d'eau chaude, dotée d'une structure réalisée en acier au carbone qui comprend une enveloppe externe (2) qui est adaptée pour délimiter une partie d'espace (3) pour contenir l'eau à chauffer, qui est introduite froide au moyen d'un connecteur d'entrée (3a) positionné à proximité de la base de l'enveloppe (2) et sort chaude au moyen d'un connecteur de sortie (3b) positionné à proximité de la partie supérieure de l'enveloppe (2), ladite partie d'espace (3) étant traversée par des tubes (6) pour le transport des gaz d'échappement produits par la combustion dans un four (4) situé à proximité de la partie supérieure de ladite partie (3), la chaudière (1) comprenant en outre un dispositif thermostatique qui est intercalé entre ledit connecteur de sortie (3b) et la partie d'espace (3) pour contenir l'eau à chauffer, qui est adapté pour laisser l'eau s'écouler lorsqu'elle atteint une valeur de température prédéterminée, et comprenant en outre une conduite de dérivation (9) pour transporter l'eau qui s'écoule à l'extérieur de l'enveloppe (2) qui délimite la partie d'espace (3) pour contenir l'eau à chauffer et est raccordée au niveau de deux extrémités (9a, 9b) respectivement audit connecteur de sortie (3b) en aval du dispositif thermostatique et à ladite partie d'espace (3) dans une position qui est intercalée entre le connecteur d'entrée (3a) d'eau froide et un diaphragme perforé (10) qui est agencé au-dessous du four (4) et est éloigné de ce dernier.

2. chaudière selon la revendication 1, **caractérisée en ce que** le dispositif thermostatique comprend une plaque (11) qui est raccordé à une pluralité d'éléments de dilatation sensibles à la chaleur (13) agencés en série afin de pouvoir éloigner ladite plaque (11) de la position pour bloquer l'orifice permettant d'avoir accès au connecteur de sortie d'eau chaude (3b), venant à bout de l'action d'un ressort (12) qui pousse ladite plaque (11) vers ladite position de blocage.
